# EUROPÄISCHE PATENTSCHRIFT

(11) **EP 3 841 292 B1**
(45) Veröffentlichungstag und Bekanntmachung des Hinweises auf die Patenterteilung: **07.01.2026**
(21) Anmeldenummer: 20754243.2
(22) Anmeldetag: 10.08.2020
(51) Int. Cl.: F02M 21/06, F02B 19/10

(54) **KRAFTSTOFFVERSORGUNGSSYSTEM ZUR AKTIVEN SPÜLUNG EINER VORKAMMER EINER OTTOMOTORISCH BETRIEBENEN BRENNKRAFTMASCHINE MIT KRAFTSTOFFDAMPF ODER EINEM KRAFTSTOFFDAMPF/LUFT-GEMISCH MITTELS EINES KRAFTSTOFFVERDAMPFERS STROMAUF DER VORKAMMER**
FUEL SUPPLY SYSTEM FOR ACTIVE FLUSHING OF AN ANTECHAMBER OF AN INTERNAL COMBUSTION ENGINE OPERATED BY GASOLINE WITH FUEL VAPOR OR A FUEL VAPOR-AIR MIXTURE BY MEANS OF A FUEL VAPORIZER UPSTREAM OF THE ANTECHAMBER
SYSTÈME D'ALIMENTATION EN CARBURANT PERMETTANT LE BALAYAGE ACTIF D'UNE PRÉCHAMBRE D'UN MOTEUR À COMBUSTION INTERNE À ALLUMAGE COMMANDÉ AVEC DE LA VAPEUR DE CARBURANT OU UN MÉLANGE D'AIR ET DE VAPEUR DE CARBURANT AU MOYEN D'UN ÉVAPORATEUR DE CARBURANT EN AMONT DE LA PRÉCHAMBRE

(30) Priorität: 03.09.2019 DE 102019123537
(43) Veröffentlichungstag der Anmeldung: 30.06.2021
(73) Patentinhaber: VOLKSWAGEN AG, 38440 Wolfsburg (DE)
(72) Erfinder: MICHELS, Karsten, 39130 Magdeburg (DE); HAGELSTEIN, Dirk, 38110 Braunschweig (DE)
(74) Vertreter: Gulde & Partner
(86) Internationale Anmeldenummer: PCT/EP2020/072370
(87) Internationale Veröffentlichungsnummer: WO 2021/043534

(56) Entgegenhaltungen:
- DE-A1- 102012 107 242
- DE-A1- 102017 130 984
- DE-A1- 102019 001 163
- DE-A1- 102019 210 069

## Beschreibung

Die Erfindung betrifft ein Kraftstoffversorgungssystem zur aktiven Spülung einer Vorkammer einer ottomotorisch betriebenen Brennkraftmaschine mit Kraftstoffdampf oder einem Kraftstoffdampf/Luft-Gemisch.

Die Druckschriften CH 683 938 A5 und DE 692 28 131 T2 bilden den gattungsgemäßen Stand der Technik, dahingehend dass in den Druckschriften Vorkammern oder vorkammerartige Zonen offenbart werden. Die Druckschriften WO 2019/068484 A1 und DE 10 2004 043 143 A1 erläutern die Kraftstoffzuführung in Vorkammern von Vorkammerzündkerzen. In der Druckschrift WO 2019/068484 A1 wird eine Spülung der Vorkammer mit zumindest Kraftstoff und Luft umfassendem Frischgas offenbart, sodass zum Zündzeitpunkt ein zündfähiges Kraftstoff-LuftGemisch in der Vorkammer aufgenommen ist. Andere Systeme sind aus DE 10 2017 130984 A1, DE 10 2019 001163 A1, DE 10 2012 107242 A1 und DE 10 2019 210069 A1 bekannt.

Der Erfindung liegt die Aufgabe zugrunde, ein Kraftstoffversorgungssystem und ein zugehöriges Verfahren zur aktiven Spülung einer Vorkammer einer ottomotorisch betriebenen Brennkraftmaschine auszubilden.

Ausgangspunkt der Erfindung ist ein Kraftstoffversorgungssystem zur aktiven Spülung mindestens einer Vorkammer einer ottomotorisch betriebenen Brennkraftmaschine mit einem gasförmigen Kraftstoff, wobei die Brennkraftmaschine mindestens eine Hauptbrennkammer umfasst, die mit der mindestens einen Vorkammer zumindest kraftstoffseitig in Verbindung steht.

Erfindungsgemäß ist vorgesehen, dass stromauf der mindestens einen Vorkammer ein Verdampfer angeordnet ist.

Erfindungsgemäß ist vorgesehen, dass der Verdampfer des Kraftstoffversorgungssystems in einer ersten Ausführungsform zwischen einer Speisepumpe zur ausschließlichen Versorgung der mindestens einen Vorkammer mit gasförmigen Kraftstoff und der mindestens einen Vorkammer angeordnet ist, wobei das Kraftstoffversorgungssystem ferner eine Hochdruckpumpe zur ausschließlichen Versorgung der mindestens einen Hauptbrennkammer mit flüssigem Kraftstoff umfasst.

In einer zweiten Ausführungsform ist erfindungsgemäß vorgesehen, dass der Verdampfer zwischen einer Hochdruckpumpe und der mindestens einen Vorkammer zur Versorgung der mindestens einen Vorkammer mit gasförmigen Kraftstoff umfasst, wobei die Hochdruckpumpe ferner zur Versorgung der mindestens einen Hauptbrennkammer mit flüssigem Kraftstoff dient, sodass stromab der Hochdruckpumpe eine Zuführleitung zu dem Verdampfer von der Zuführleitung zu der mindestens einen Hauptbrennkammer abzweigt.

In mehreren möglichen bevorzugten Ausführungen ist erfindungsgemäß vorgesehen, dass der Verdampfer zur Verdampfung des flüssigen Kraftstoffs mit einer Heizvorrichtung versehen oder mit einer Heizvorrichtung zur Wärmezuführung in Verbindung steht.

In einer bevorzugten Ausführung ist vorgesehen, dass der Verdampfer mit einer separaten Heizvorrichtung versehen ist.

In einer anderen bevorzugten Ausführung ist vorgesehen, dass der Verdampfer in eine Vorheizvorrichtung der Brennkraftmaschine für den Kaltstart eingekoppelt ist.

In einer weiteren bevorzugten Ausführung ist vorgesehen, dass der Verdampfer in einer Wärmetauscher-Ausführung ausgebildet ist, wobei die Wärme einem Kühlwasser der Brennkraftmaschine entnommen und dem Verdampfer zugeführt wird.

In einer bevorzugten Ausgestaltungsvariante ist das Kraftstoffversorgungssystem derart ausgebildet, dass zwischen dem Verdampfer und der mindestens einen Vorkammer ein Regelmischventil angeordnet ist, über das dem im Verdampfer verdampften gasförmigen Kraftstoff ein weiteres gasförmiges Fluid, insbesondere Luft zuführbar ist, sodass der mindestens einen Vorkammer in vorteilhafter Weise wahlweise unvermischter gasförmiger Kraftstoff oder ein Kraftstoffdampf/Luft-Gemisch in einem vorgebbaren Mischungsverhältnis zuführbar ist.

Ein wesentlicher Aspekt des erfindungsgemäßen Verfahrens besteht unter Verwendung des Kraftstoffversorgungssystems in der aktiven Spülung mindestens einer Vorkammer einer ottomotorisch betriebenen Brennkraftmaschine mit einem gasförmigen Kraftstoff, wobei die Brennkraftmaschine mindestens eine Hauptbrennkammer umfasst, die mit der mindestens einen Vorkammer zumindest kraftstoffseitig in Verbindung steht, wobei erfindungsgemäß vorgesehen ist, dass flüssiger Kraftstoff vor der Zuführung des Kraftstoffs zu der mindestens einen Vorkammer in einem Verdampfer verdampft und der einen Vorkammer unvermischt oder mit Luft vermischt zugeführt wird, der stromauf der mindestens einen Vorkammer angeordnet ist.

Die Erfindung wird nachfolgend anhand der zugehörigen Zeichnung erläutert. Es zeigen:

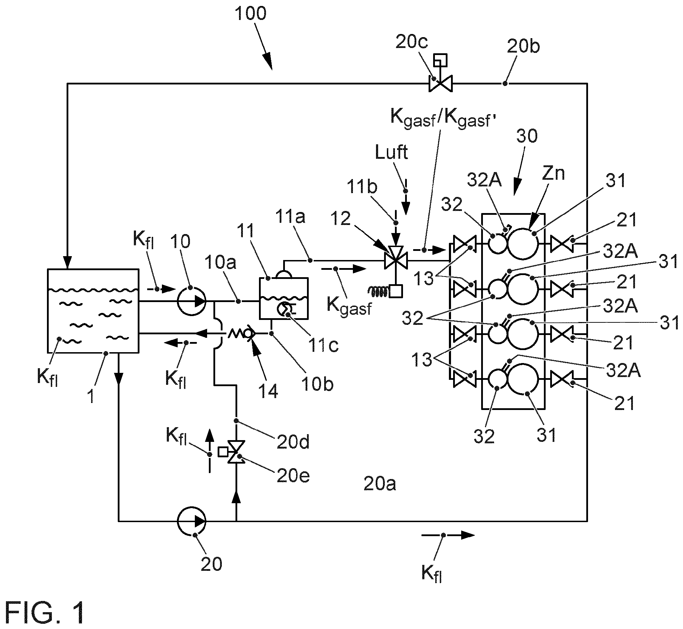

- Figur 1: schematisch ein Kraftstoffversorgungssystem zur aktiven Spülung einer Vorkammer einer Brennkraftmaschine, insbesondere einer ottomotorischen Brennkraftmaschine mit Kraftstoffdampf oder einem Kraftstoffdampf/LuftGemisch mittels eines Kraftstoffverdampfers stromauf der Vorkammer.

Erfindungsgemäß wird, gemäß Figur 1 eine Anordnung eines Kraftstoffverdampfers 11 für die aktive Spülung mittels eines gasförmigen Otto-Kraftstoffs einer je Zylinder Zₙ angeordneten Vorkammer 32 innerhalb eines Kraftstoffversorgungssystems 100 einer ottomotorischen Brennkraftmaschine 30 vorgeschlagen, wobei eine getaktete Einblasung des gasförmigen Kraftstoffs K_{gasf}, der im Kraftstoffverdampfer 11 verdampft wird, über jedem Zylinder Zₙ zugeordnete Taktventile 13 in die jeweilige Vorkammer 32 erfolgt.

Erfindungsgemäß zeichnet sich das Verfahren generell durch die aktive Spülung der Vorkammer/n 32 aus, die erfindungsgemäß mit gasförmigem Kraftstoffs K_{gasf}, der in dem Kraftstoffverdampfer 11 verdampft wird, durchgeführt wird.

Der gasförmige Kraftstoff K_{gasf} wird in der jeweiligen Vorkammer 32 mittels je einer Fremdzündeinrichtung 32A aktiv gezündet, wie in Figur 1 ebenfalls schematisch verdeutlicht wird.

Je Zyklus, wird der jeweiligen aktiven Vorkammer 32 über die Taktventile 13 eine Zünd(vor)kammerladung, die mittels der Fremdzündeinrichtung 32A gezündet wird.

Es erfolgt anschließend das Zünden der Hauptbrennraumladung mittels dem oder den in der jeweiligen Vorkammer 32 erzeugten reaktiven brennenden Gasstrahl/en (Flammen), der/die aus der jeweiligen Vorkammer 32 in den Hauptbrennraum beziehungsweise die Hauptbrennkammer 31 austreten.

Nach dem Abbrand der gezündeten Zünd(vor)kammerladung wird erneut eine Zünd(vor)kammerladung zugeführt und gezündet, sodass das vorhandene Restgas in der jeweiligen Vorkammer 32 aktiv aus der jeweiligen Vorkammer 32 in die Hauptbrennkammer 31 gespült wird, wobei sich der zuvor beschriebene Vorgang im Betrieb der Brennkraftmaschine 30 entsprechend wiederholt.

Die mittels der Zünd(vor)kammerladungen in der Vorkammer 32 erzeugten reaktiven brennenden Gasstrahlen (Flammen) treten somit über mindestens eine Öffnung (in Figur 1 nicht näher dargestellt) in den Hauptbrennkammer 31 der Brennkraftmaschine 30 ein, und Zünden die der jeweiligen Hauptbrennkammer 31 zugeführte Hauptbrennladung.

Für die Spülung der aktiven Vorkammern 32 mit gasförmigem Kraftstoff K_{gasf} (Kraftstoffdampf) oder einem Kraftstoffdampf/Luft-Gemisch K_{gasf'} wird der Kraftstoffverdampfer 11 erfindungsgemäß, ausgehend von dem flüssigen Kraftstoff K_{fl} im Tank 1, der bevorzugt vom Motorkühlwasser (in einer Wärmetauscher-Ausführung) beziehungsweise von einer Vorheizvorrichtung für den Kaltstart oder einer separaten Heizvorrichtung elektrisch beheizt. Der Kraftstoffverdampfer 11 wird über eine Zuführleitung 10a (vergleiche Figur 1) mit flüssigem Kraftstoff K_{fl} aus dem Tank 1 gespeist.

Die jeweilige Heizvorrichtung 11c in einer der beispielhaft oben genannten Ausführungen ist in Figur 1 schematisch dargestellt und mit dem Bezugszeichen 11c gekennzeichnet.

Der flüssige Kraftstoff K_{fl} wird dem Kraftstoffverdampfer 11 in einer ersten Ausführungsform von einer Speisepumpe 10 zugeführt, die erfindungsgemäß das benötigte Druckniveau des Einblasedrucks der Zünd(vor)kammerladungen erzeugt.

Innerhalb des Kraftstoffverdampfers 11 wird der flüssige Kraftstoff K_{fl} verdampft und liegt somit in gasförmiger Phase K_{gasf} vor und wird über die Zuführleitung 11a zu den Taktventilen 13, die den Vorkammern 32 vorgeschaltet sind, zugeführt.

Der Kraftstoffdampf K_{gasf} wird aus dem Kraftstoffverdampfer 11 abgezogen und in einer Ausgestaltungsvariante unvermischt dem Einblasesystem des Kraftstoffversorgungssystems 100, insbesondere den Taktventilen 13 zugeführt.

In einer anderen Ausgestaltungsvariante wird Kraftstoffdampf K_{gasf} über ein Regelmischventil 12 mit einem gasförmigen Fluid, insbesondere Luft gemischt, sodass ein Luft-Kraftstoffdampf-Gemisch K_{gasf'} gebildet wird, wobei das Regelmischventil 12 in der Zuführleitung 11a zwischen dem Kraftstoffverdampfer 11 und den Taktventilen 13 angeordnet ist.

Es besteht somit in vorteilhafter Weise die Möglichkeit je nach Ausgestaltungsvariante reinen Kraftstoffdampf K_{gasf} oder mittels des Regelmischventils 12, welchem über eine Zuführleitung 11b insbesondere Luft zugeführt wird, das Kraftstoff/Luft-Gemisch K_{gasf'} in die aktiven Vorkammer/n 32 einzublasen.

Damit der Kraftstoffdampf K_{gasf} im Verdampfer 11 nicht zu stark an leichtflüchtigen Komponenten verarmt, ist ein Rückführventil 14 in einer Rückführleitung 10b zur Rückleitung einer vorgebbaren Menge des flüssigen Kraftstoffs K_{fl} in den Tank 1 angeordnet.

Das Rückführventil 14 kann gemäß der Darstellung in Figur als Überdruckventil oder auch als Taktventil ausgebildet sein.

Ein wesentlicher Vorteil der beschriebenen Vorgehensweise und des beschriebenen Systems besteht darin, dass durch die Versorgung des Verdampfers 100 mit flüssigem Kraftstoff K_{fl} im Vergleich zur einer Verdichtung eines bereits gasförmig vorliegenden Kraftstoffs auf das benötigte Druckniveau in den Vorkammern 32 deutlich weniger Antriebsenergie für die Speisepumpe 10 benötigt wird.

Der in den Vorkammern 32 benötigte Druck muss zum Zeitpunkt der Einbringung der jeweiligen Zünd(vor)kammerladung zum Spülen der Vorkammern 32 höher sein als der Druck der Hauptbrennraumladung in der Hauptbrennkammer 31.

Die Speisepumpe 10 kann den flüssigen Kraftstoff K_{fl} auch anders als dargestellt in einer Variante der ersten Ausführungsform zweckmäßigerweise vor einer Hochdruckpumpe 20 des Kraftstoffversorgungssystems 100 entnehmen, sodass der Tank 1 keinen separaten Anschluss für die Speisepumpe 10 benötigt.

Die Figur 1 zeigt ergänzend die Hochdruckpumpe 20 mittels der aus dem Tank 1 über eine Zuführleitung 20a flüssiger Kraftstoff K_{fl} über Einspritzventile 21 zu den Hauptbrennräumen 31 der Brennkraftmaschine 30 geführt wird, um Kraftstoff flüssigen K_{fl} in den Hauptbrennkammern 31 die Hauptbrennraumladung/en abzusetzen beziehungsweise einzuspritzen.

Überschüssiger flüssiger Kraftstoff K_{fl} wird gemäß Figur 1 über eine Rückführleitung 20b, in der gemäß Figur 1 ein Mengensteuerventil 20c angeordnet ist, zu dem Tank 1 zurückgeführt.

In einer zweiten Ausführungsform ist es möglich, dass der flüssige Kraftstoff K_{fl} zur Versorgung des Kraftstoffverdampfers 11 gemäß Figur 1 über die Zuführleitung 20d stromab der Hochdruckpumpe 20 entnommen wird, wobei dann auf eine zusätzliche Speisepumpe 10 verzichtet werden kann.

In der Zuführleitung 20d ist bei dieser Ausführungsvariante gemäß Figur 1 ein entsprechendes Druckregelventil 20e angeordnet, das den Druck der Hochdruckpumpe 20 auf den vorgebbaren Verdampferdruck des Kraftstoffverdampfers 11 entsprechend reduziert, mithin entspannt.

Das Kraftstoffversorgungssystem 100 ist eingerichtet, das erfindungsgemäße Verfahren zur Spülung einer aktiven Vorkammer für Ottomotoren mit Kraftstoffdampf oder einem Kraftstoffdampf/Luft-Gemisch mittels eines Kraftstoffverdampfers auszuführen. Zu diesem Zweck umfasst die das Kraftstoffversorgungssystem (100) insbesondere mindestens eine Steuereinrichtung (Motorsteuergerät), in der ein computerlesbarer Programmalgorithmus zur Ausführung des Verfahrens und gegebenenfalls erforderliche Kennfelder gespeichert sind. Die Steuereinrichtung steuert und regelt die oben genannten ansteuer- und regelbaren Komponenten.

Das Kraftstoffversorgungsystem 100 gemäß dieser Erfindung kann Teil eines Brennstoffversorgungs- und Zündsystem sein, welches in Kombination mit einem Gasbrennverfahren eingesetzt wird, welches eine erhöhte Magerlauffähigkeit aufweist.

Flüssiges Erdgas, als flüssiger Kraftstoff K_{fl} im Tank 1 für eine Brennkraftmaschine 30, insbesondere eine Gasbrennkraftmaschine rückt derzeit in den Mittelpunkt. Es ist vorgesehen, die Gasbrennkraftmaschine mit Vorkammern 32 und Hauptbrennkammern 31 auszubilden und der Gasbrennkraftmaschine das zuvor erläuterte Kraftstoffversorgungssystem zuzuordnen. Mit anderen Worten das Kraftstoffversorgungssystem 100 und das Verfahren betrifft als flüssigen Kraftstoff K_{fl}, insbesondere flüssiges Benzin als auch bei einer Verwendung in als Gasbrennkraftmaschine flüssige Gase, insbesondere Erdgas, welches in flüssiger Form in einem Tank 1 des Kraftstoffversorgungssystems 100 bevorratet ist.

Es ist bereits bekannt, die Vorkammern mit einer Zünd(vor)kammerladung reinen gasförmigen Kraftstoffs K_{gasf} zu spülen. Die Erfindung schlägt eine Lösung mittels integriertem Kraftstoffverdampfer 11 vor, die zusammen mit den erläuterten Komponenten des Kraftstoffversorgungssystem eine Bereitstellung des unvermischten gasförmigen Kraftstoffs oder einem Kraftstoffdampf/Luft-Gemisch K_{gasf}, K_{gasf'} gewährleistet, um die Spülung der Vorkammer/n 32 innerhalb des Kraftstoffversorgungssystems 100 zu bewirken.

### Bezugszeichenliste

- 100: Kraftstoffversorgungssystem
- 1: Tank
- 10: Speisepumpe
- 10a: Zuführleitung
- 10b: Rückführleitung
- 11: Kraftstoffverdampfer
- 11a: Zuführleitung
- 11b: Zuführleitung
- 11c: Heizvorrichtung
- 12: Regelmischventil
- 13: Taktventile
- 14: Rückführventil
- 20: Hochdruckpumpe
- 20a: Zuführleitung
- 20b: Rückführleitung
- 20c: Mengensteuerventil
- 20d: Zuführleitung
- 20e: Mengensteuerventil
- 21: Einspritzventile
- 30: Brennkraftmaschine
- Zn: Zylinder
- 31: Hauptbrennkammer
- 32: Vorkammer
- 32A: Fremdzündeinrichtung
- K: Kraftstoff
- K_{fl}: flüssiger Kraftstoff
- K_{gasf}: gasförmiger Kraftstoff
- K_{gasf'}: Kraftstoffdampf/Luft-Gemisch

## Patentansprüche

1. Kraftstoffversorgungssystem (100) zur aktiven Spülung mindestens einer Vorkammer (32) einer ottomotorisch betriebenen Brennkraftmaschine (30) mit einem gasförmigen Kraftstoff (K), wobei die Brennkraftmaschine (30) mindestens eine Hauptbrennkammer (31) umfasst, die mit der mindestens einen Vorkammer (32) zumindest kraftstoffseitig in Verbindung steht, wobei stromauf der mindestens einen Vorkammer (32) ein Verdampfer (11) angeordnet ist, wobei der Verdampfer (11) zwischen einer Speisepumpe (10) zur ausschließlichen Versorgung der mindestens einen Vorkammer (32) mit gasförmigem Kraftstoff (K_{gasf}, K_{gasf'}) und der mindestens einen Vorkammer (32) angeordnet ist, wobei das Kraftstoffversorgungssystem (100) ferner eine Hochdruckpumpe (20) zur ausschließlichen Versorgung der mindestens einen Hauptbrennkammer (31) mit flüssigem Kraftstoff (K_{fl}) umfasst,
**dadurch gekennzeichnet, dass** zwischen dem Verdampfer (11) und der mindestens einen Vorkammer (32) ein Regelmischventil (12) angeordnet ist, über das dem im Verdampfer (11) verdampften gasförmigen Kraftstoff (K_{gasf}) ein weiteres gasförmiges Fluid zuführbar ist, sodass der mindestens einen Vorkammer (32) wahlweise unvermischter gasförmiger Kraftstoff (K_{gasf}) oder ein Kraftstoffdampf/Luft-Gemisch (K_{gasf'}) in einem vorgebbaren Verhältnis zuführbar ist.

2. Kraftstoffversorgungssystem (100) zur aktiven Spülung mindestens einer Vorkammer (32) einer ottomotorisch betriebenen Brennkraftmaschine (30) mit einem gasförmigen Kraftstoff (K), wobei die Brennkraftmaschine (30) mindestens eine Hauptbrennkammer (31) umfasst, die mit der mindestens einen Vorkammer (32) zumindest kraftstoffseitig in Verbindung steht, wobei stromauf der mindestens einen Vorkammer (32) ein Verdampfer (11) angeordnet ist, wobei der Verdampfer (11) zur Versorgung der mindestens einen Vorkammer (32) mit gasförmigen Kraftstoff (K_{gasf}, K_{gasf'}) zwischen einer Hochdruckpumpe (20) und der mindestens einen Vorkammer (32) angeordnet ist, wobei die Hochdruckpumpe (20) ferner zur Versorgung der mindestens einen Hauptbrennkammer (31) mit flüssigem Kraftstoff (K_{fl}) dient, wobei stromab der Hochdruckpumpe (20) eine Zuführleitung (20e) zu dem Verdampfer (11) von der Zuführleitung (20a) zu der mindestens einen Hauptbrennkammer (31) abzweigt, wobei zwischen dem Verdampfer (11) und der mindestens einen Vorkammer (32) ein Regelmischventil (12) angeordnet ist, über das dem im Verdampfer (11) verdampften gasförmigen Kraftstoff (K_{gasf}) ein weiteres gasförmiges Fluid zuführbar ist, sodass der mindestens einen Vorkammer (32) wahlweise unvermischter gasförmiger Kraftstoff (K_{gasf}) oder ein Kraftstoffdampf/Luft-Gemisch (K_{gasf'}) in einem vorgebbaren Verhältnis zuführbar ist.

3. Kraftstoffversorgungssystem (100) nach Anspruch 1 oder 2, **dadurch gekennzeichnet, dass** der Verdampfer (11) zur Verdampfung des flüssigen Kraftstoffs (K_{fl}) mit einer Heizvorrichtung (11c) versehen oder mit einer Heizvorrichtung (11c) zur Wärmezuführung in Verbindung steht.

4. Kraftstoffversorgungssystem (100) nach Anspruch 3, **dadurch gekennzeichnet, dass** der Verdampfer (11) mit einer separaten Heizvorrichtung versehen ist.

5. Kraftstoffversorgungssystem (100) nach Anspruch 3, **dadurch gekennzeichnet, dass** der Verdampfer (11) in eine Vorheizvorrichtung der Brennkraftmaschine (100) für den Kaltstart eingekoppelt ist.

6. Kraftstoffversorgungssystem (100) nach Anspruch 3, **dadurch gekennzeichnet, dass** der Verdampfer (11) in einer Wärmetauscher-Ausführung ausgebildet ist, wobei die Wärme einem Kühlwasser der Brennkraftmaschine (100) entnommen und dem Verdampfer (11) zugeführt wird.

7. Verfahren zur aktiven Spülung mindestens einer Vorkammer (32) einer ottomotorisch betriebenen Brennkraftmaschine (30) mit einem gasförmigen Kraftstoff (K), wobei die Brennkraftmaschine (30) mindestens eine Hauptbrennkammer (31) umfasst, die mit der mindestens einen Vorkammer (32) zumindest kraftstoffseitig in Verbindung steht, wobei flüssiger Kraftstoff (K_{fl}) vor der Zuführung des Kraftstoffs zu der mindestens einen Vorkammer (32) in einem Verdampfer (11) verdampft wird, der stromauf der mindestens einen Vorkammer (32) angeordnet ist,
**dadurch gekennzeichnet, dass** zwischen dem Verdampfer (11) und der mindestens einen Vorkammer (32) ein Regelmischventil (12) angeordnet ist, über das dem im Verdampfer (11) verdampften gasförmigen Kraftstoff (K_{gasf}) ein weiteres gasförmiges Fluid zugeführt wird, sodass der mindestens einen Vorkammer (32) wahlweise unvermischter gasförmiger Kraftstoff (K_{gasf}) oder ein Kraftstoffdampf/Luft-Gemisch (K_{gasf'}) in einem vorgebbaren Verhältnis zuführbar ist.

## Claims

1. Fuel supply system (100) for actively scavenging at least one pre-chamber (32) of a gasoline-powered internal combustion engine (30) with a gaseous fuel (K), the internal combustion engine (30) comprising at least one main combustion chamber (31) which is connected to the at least one pre-chamber (32) at least in terms of fuel, an evaporator (11) being arranged upstream of the at least one pre-chamber (32), the evaporator (11) being arranged between a feed pump (10) for exclusively supplying the at least one pre-chamber (32) with gaseous fuel (K_{gasf}, K_{gasf'}) and the at least one pre-chamber (32), the fuel supply system (100) further comprising a high-pressure pump (20) for exclusively supplying the at least one main combustion chamber (31) with liquid fuel (K_{fl}),
**characterized in that** a control mixing valve (12) is arranged between the evaporator (11) and the at least one pre-chamber (32), via which control mixing valve a further gaseous fluid can be fed to the gaseous fuel (K_{gasf}) evaporated in the evaporator (11), with the result that either unmixed gaseous fuel (K_{gasf}) or a fuel vapor/air mixture (K_{gasf'}) can be fed to the at least one pre-chamber (32) in a predeterminable ratio.

2. Fuel supply system (100) for actively scavenging at least one pre-chamber (32) of a gasoline-powered internal combustion engine (30) with a gaseous fuel (K), wherein the internal combustion engine (30) comprises at least one main combustion chamber (31) which is connected to the at least one pre-chamber (32) at least in terms of fuel, wherein an evaporator (11) is arranged upstream of the at least one pre-chamber (32),
wherein the evaporator (11) is arranged between a high-pressure pump (20) and the at least one pre-chamber (32) in order to supply the at least one pre-chamber (32) with gaseous fuel (K_{gasf}, K_{gasf'}), wherein the high-pressure pump (20) is further used to supply the at least one main combustion chamber (31) with liquid fuel (K_{fl}), wherein downstream of the high-pressure pump (20) a feed line (20e) to the evaporator (11) branches off from the feed line (20a) to the at least one main combustion chamber (31), wherein a control mixing valve (12) is arranged between the evaporator (11) and the at least one pre-chamber (32), via which control mixing valve a further gaseous fluid can be fed to the gaseous fuel (K_{gasf}) evaporated in the evaporator (11), with the result that either unmixed gaseous fuel (K_{gasf}) or a fuel vapor/air mixture (K_{gasf}) can be fed to the at least one pre-chamber (32) in a predeterminable ratio.

3. Fuel supply system (100) according to claim 1 or 2, **characterized in that** the evaporator (11) for evaporating the liquid fuel (K_{fl}) is provided with a heating device (11c) or is connected to a heating device (11c) for supplying heat.

4. Fuel supply system (100) according to claim 3, **characterized in that** the evaporator (11) is provided with a separate heating device.

5. Fuel supply system (100) according to claim 3, **characterized in that** the evaporator (11) is coupled into a preheating device of the internal combustion engine (100) for cold starts.

6. Fuel supply system (100) according to claim 3, **characterized in that** the evaporator (11) is designed as a heat exchanger, heat being taken from cooling water of the internal combustion engine (100) and supplied to the evaporator (11).

7. Method for actively scavenging at least one pre-chamber (32) of a gasoline-powered internal combustion engine (30) with a gaseous fuel (K), the internal combustion engine (30) comprising at least one main combustion chamber (31) which is connected to the at least one pre-chamber (32) at least in terms of fuel, liquid fuel (K_{fl}) being evaporated in an evaporator (11) before the fuel is fed to the at least one pre-chamber (32), which evaporator is arranged upstream of the at least one pre-chamber (32),
**characterized in that** a control mixing valve (12) is arranged between the evaporator (11) and the at least one pre-chamber (32), via which control mixing valve a further gaseous fluid is fed to the gaseous fuel (K_{gasf}) evaporated in the evaporator (11), with the result that either unmixed gaseous fuel (K_{gasf}) or a fuel vapor/air mixture (K_{gasf}) can be fed to the at least one pre-chamber (32) in a predeterminable ratio.

## Revendications

1. Système d'alimentation en carburant (100) permettant le balayage actif d'au moins une préchambre (32) d'un moteur à combustion interne (30) à allumage commandé avec un carburant gazeux (K), dans lequel le moteur à combustion interne (30) comprend au moins une chambre de combustion principale (31) qui est en liaison avec l'au moins une préchambre (32) au moins du côté carburant, dans lequel un évaporateur (11) est agencé en amont de l'au moins une préchambre (32), dans lequel l'évaporateur (11) est agencé entre une pompe d'alimentation (10), pour l'alimentation exclusive de l'au moins une préchambre (32) en carburant gazeux (K_{gasf}, K_{gasf'}), et l'au moins une préchambre (32), dans lequel le système d'alimentation en carburant (100) comprend en outre une pompe haute pression (20) pour l'alimentation exclusive de l'au moins une chambre de combustion principale (31) en carburant liquide (K_{fl}),
**caractérisé en ce que,** entre l'évaporateur (11) et l'au moins une préchambre (32) est agencée une soupape de mélange de régulation (12) par l'intermédiaire de laquelle un autre fluide gazeux peut être apporté au carburant gazeux (K_{gasf}) évaporé dans l'évaporateur (11), de sorte que, au choix, du carburant gazeux non mélangé (K_{gasf}) ou un mélange vapeur de carburant/air (K_{gasf'}) dans un rapport pouvant être prédéfini peut être apporté à l'au moins une préchambre (32).

2. Système d'alimentation en carburant (100) pour le balayage actif d'au moins une préchambre (32) d'un moteur à combustion interne (30) à allumage commandé avec un carburant gazeux (K), dans lequel le moteur à combustion interne (30) comprend au moins une chambre de combustion principale (31) qui est en liaison avec l'au moins une préchambre (32) au moins du côté carburant, dans lequel un évaporateur (11) est agencé en amont de l'au moins une préchambre (32), dans lequel
l'évaporateur (11) pour l'alimentation de l'au moins une préchambre (32) en carburant gazeux (K_{gasf}, K_{gasf'}) est agencé entre une pompe haute pression (20) et l'au moins une préchambre (32), dans lequel la pompe haute pression (20) sert en outre à alimenter l'au moins une chambre de combustion principale (31) en carburant liquide (K_{fl}), dans lequel une conduite d'apport (20e) vers l'évaporateur (11) est dérivée en aval de la pompe haute pression (20) de la conduite d'apport (20a) vers l'au moins une chambre de combustion principale (31), dans lequel une soupape de mélange de régulation (12) est agencée entre l'évaporateur (11) et l'au moins une préchambre (32), soupape par l'intermédiaire de laquelle un autre fluide gazeux peut être apporté au carburant gazeux (K_{gasf}) évaporé dans l'évaporateur (11), de sorte que, au choix, du carburant gazeux non mélangé (K_{gasf}) ou un mélange vapeur de carburant/air (K_{gasf'}) dans un rapport pouvant être prédéfini peut être apporté à l'au moins une préchambre (32).

3. Système d'alimentation en carburant (100) selon la revendication 1 ou 2, **caractérisé en ce que** l'évaporateur (11) est muni d'un dispositif de chauffage (11c) pour l'évaporation du carburant liquide (K_{fl}) ou est en liaison avec un dispositif de chauffage (11c) pour l'apport de chaleur.

4. Système d'alimentation en carburant (100) selon la revendication 3, **caractérisé en ce que** l'évaporateur (11) est muni d'un dispositif de chauffage séparé.

5. Système d'alimentation en carburant (100) selon la revendication 3, **caractérisé en ce que** l'évaporateur (11) est couplé à un dispositif de préchauffage du moteur à combustion interne (100) pour le démarrage à froid.

6. Système d'alimentation en carburant (100) selon la revendication 3, **caractérisé en ce que** l'évaporateur (11) est réalisé sous la forme d'un échangeur de chaleur, dans lequel la chaleur est prélevée sur une eau de refroidissement du moteur à combustion interne (100) et apportée à l'évaporateur (11).

7. Procédé de balayage actif d'au moins une préchambre (32) d'un moteur à combustion interne (30) à allumage commandé avec un carburant gazeux (K), dans lequel le moteur à combustion interne (30) comprend au moins une chambre de combustion principale (31) qui est en liaison avec l'au moins une préchambre (32) au moins du côté carburant, dans lequel du carburant liquide (K_{fl}) est évaporé dans un évaporateur (11) avant l'apport du carburant à l'au moins une préchambre (32), lequel évaporateur est agencé en amont de l'au moins une préchambre (32),
**caractérisé en ce que,** entre l'évaporateur (11) et l'au moins une préchambre (32) est agencée une soupape de mélange de régulation (12) par l'intermédiaire de laquelle un autre fluide gazeux est apporté au carburant gazeux (K_{gasf}) évaporé dans l'évaporateur (11), de sorte que du carburant gazeux non mélangé (K_{gasf}) ou un mélange vapeur de carburant/air (K_{gasf'}) dans un rapport pouvant être prédéfini peut être apporté au choix à l'au moins une préchambre (32).
